# EUROPEAN PATENT APPLICATION

(11) **EP 2 687 732 A1**
(43) Date of publication of application: **22.01.2014**
(21) Application number: 12757813.6
(22) Date of filing: 09.03.2012
(51) Int. Cl.: F16B 2/16, F16G 11/04, F16G 11/10, G05D 15/00

(54) **RETENTION ELEMENT FOR TENSIONED CABLES**

(30) Priority: 15.03.2011 ES 201100294 P
(71) Applicant: Pracer Perfiladores, S.L.L., 31190 Paternain (Navarra) (ES)
(72) Inventor: ESPARZA FONTANILLO, Esteban, E-31008 Pamplona (Navarra) (ES)
(74) Representative: Intès, Didier Gérard André
(86) International application number: PCT/ES2012/000055
(87) International publication number: WO 2012/123603

(57) **Abstract**

The present invention relates to a retaining member for tensioned cables, which is formed by a body (2) provided with one or two longitudinal channels (3), and in relation to each of which a locking mechanism is arranged which is formed by a movable part (4) pushed by a spring (5), the body (2) defining, at the ends, fronts (9) that are completely perpendicular to the channels (3), such that upon retention of a tensioned cable (8) in abutment against a securing structure, said body (2) establishes a stable abutment position against the tension of the cable (8).

## Description

### Technical Field

The present invention relates to the assembly of tensioned cables in any application, proposing a member that allows retaining tensioned cables with respect to securing structures for same under advantageous conditions.

### State of the Art

In some applications, such as the assembly of fences or vine-supporting lines, it is common to arrange tensioned cables which are fixed to posts or other securing structures, where the cables must be retained so as to safely withstand the tension thereof.

To that end, the cables to be tensioned are locked at one end to a securing point and from the other end the traction necessary for defining the desired tension is performed with suitable means, the cable being locked at that second end to another securing point under such conditions.

An important problem when assembling tensioned cables is that of defining retention at the securing points, because even though the retaining lock at the first securing point is easy to safely establish using various fixing means, the retaining lock at the second securing point is difficult since it has to be performed with the cable under tension and such tension has to be maintained when the traction means are no longer acting.

For said function of locking the tensioned cables at the securing points, retaining members have been developed which comprise a body provided with longitudinally traversing channels, and there being internally arranged in relation to each of the channels a movable part, such as a ball or a roller, said movable part being pushed by a spring in an oblique direction with respect to the respective channel, such that a cable can pass through each channel in one direction, the cable being locked against movement in the opposite direction as the movable part acting on the channel applies a wedge effect on the cable, which thus allows splicing together two tensioned cables or establishing a retaining abutment of a tensioned cable against a securing structure.

Given the mechanical hardness features of ceramic materials, the movable part intended for locking the cables in said retaining members is usually made of such material, which is nevertheless very fragile and therefore readily breaks in response to certain stresses.

However, conventional retaining members of this type generally present an irregular configuration at the ends, such that in the abutment function for retaining tensioned cables, said members initially act as a support that is not stable on the securing structure, the member tilting to a stable support position when the traction means used for tensioning the cable are no longer acting, whereby instantaneously producing a transverse stress component of the cable on the movable locking part, which in some cases breaks due to the effect of that stress component, 4-5% of the members used ultimately breaking, with the subsequent economic repercussion and delay where they are applied.

### Object of the Invention

The invention proposes a retaining member that allows effectively establishing an abutting lock for tensioned cables at the securing points, said member having features that prevent transmitting harmful stress components from the tensioned cables of application to the part that establishes the lock in said retaining member.

Like conventional members having the same function, this retaining member object of the invention comprises a body made of a rigid material, provided with one or two longitudinal traversing channels, and in relation to each conduit there is arranged a movable part which is obliquely pushed by a spring towards the corresponding channel.

According to the invention, the body of the retaining member is defined, at the ends, with a front that is completely perpendicular to the channel or channels longitudinally traversing said body.

A retaining member through which a tensioned cable can pass to establish a lock thereof against a post or any other securing structure is thus formed, said retaining member presenting an abutting front defining a planar seating support in the direction of the line of the tensioned cable, such that it establishes a completely stable seat against the securing structure, so the stress of the tensioned cable remains constant in the longitudinal line of the retaining member.

Therefore, by applying the tension of the cable of application the retaining member is not subjected to transverse stresses that may affect the part for locking the tensioned cable, whereby preventing said part for locking the tensioned cable from breaking and the retaining member being thus more effective and durable, which allows saving the deterioration percentage and the subsequent damage involved when locking parts in conventional retaining members break.

The front perpendicular to the channels for the passage of cables in the body of the retaining member is further provided with anti-slip conformations, which ensures fastness of the retaining member in support against the securing structures of the tensioned cables, thereby completely preventing any transverse stress component of the tensioned cables on the retaining member in the function of application.

Said retaining member object of the invention therefore has very advantageous features for retaining tensioned cables in abutment on securing structures, acquiring its own identity and preferred character with respect to conventional members having the same function of retaining tensioned cables.

### Description of the Drawings

Figure 1 shows a longitudinal section view of a cable retaining member according to the invention, with two longitudinal channels for the passage of cables and in relation to said channels two respective locking mechanisms arranged in opposite directions.
Figure 2 is a section view of said retaining member of the preceding figure, with a cable passing through one of the longitudinal channels.
Figure 3 is a section view of the same retaining member as in Figure 1, with respective cables passing through the two longitudinal channels thereof.
Figure 4 shows a section view of a cable retaining member according to the invention, with a single longitudinal channel for the passage of a cable and in relation to said channel a respective locking mechanism oriented in one direction.
Figure 5 is a section view of the retaining member of the preceding figure, with a cable passing through the longitudinal channel thereof.
Figure 6 is a detail of the arrangement of application of a conventional retaining member for cables while retaining the tension of a cable with respect to a securing structure.
Figure 7 is a detail of the arrangement of application of a retaining member for cables according to the invention while retaining the tension of a cable with respect to a securing structure.

### Detailed Description of the Invention

The object of the invention relates to a retaining member for tensioned cables, retaining them with respect to securing structures (1), of the type comprising a body (2) made of a rigid material along which there extend channels (3) intended for the passage of cables, and in relation to each of said channels (3) there is arranged a mechanism formed by a movable part (4), such as a ball or a roller, which is pushed by a spring (5) obliquely towards the corresponding channel (3), said mechanism being housed in a cavity (6) communicating with the channel (3) and being closed at the other end by a cap (7) where the spring (5) rests.

This being the case, there can be passed through each channel (3) one cable (8), which can be introduced in the pushing direction of the movable part (4) against the action of the respective spring (5), such that once the cable (8) goes past the position of the movable part (4), it is locked by said movable part (4) in the reverse direction, because the pressure that that movable part (4) exerts on the cable (8) when being pushed by the spring (5), due to the oblique direction in which that pressure acts, makes the pressure of the movable part on the cable (8) increase when trying to move the cable (8) in reverse, such increase being greater the greater the stress when moving the cable in reverse, which prevents the cable (8) from being able to move in that reverse direction.

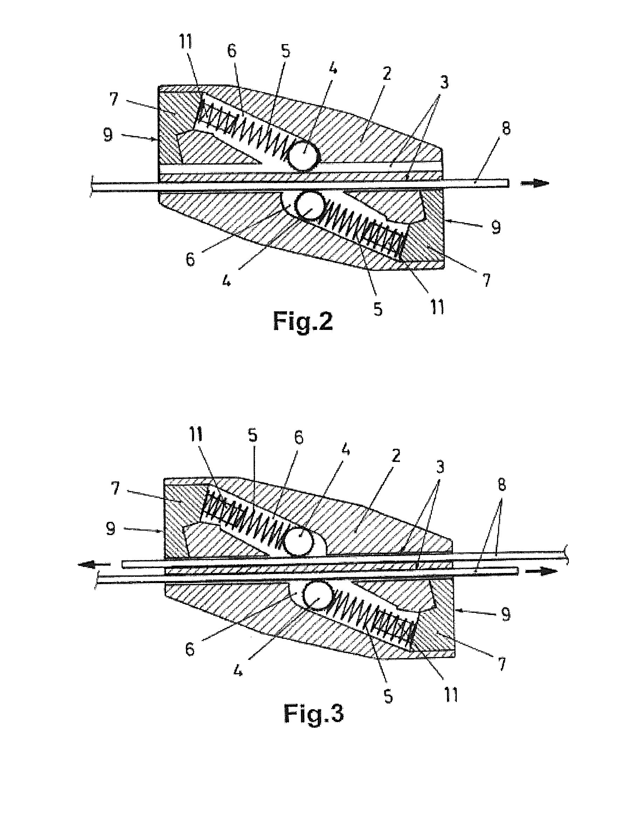

The retaining member thus formed can be used as an attachment member between two consecutive tensioned cables (8), passing one of the cables (8) in one direction and the other cable in the opposite direction through the respective conduits (3), as observed in Figure 3, such that upon tensioning the set of the two cables (8), both are locked in the retaining member, which thus acts as a splicing attachment between the mentioned cables (8).

Likewise, however, said retaining member can also be used as a retaining abutment for retaining tensioned cables (8) with respect to securing structures (1), for example in the assembly of tensioned cables (8) for training vines, forming fences or any other application, to that end passing the cable (8) to be retained through any of the channels (3) of the body (2) of the retaining member, as seen in Figure 2.

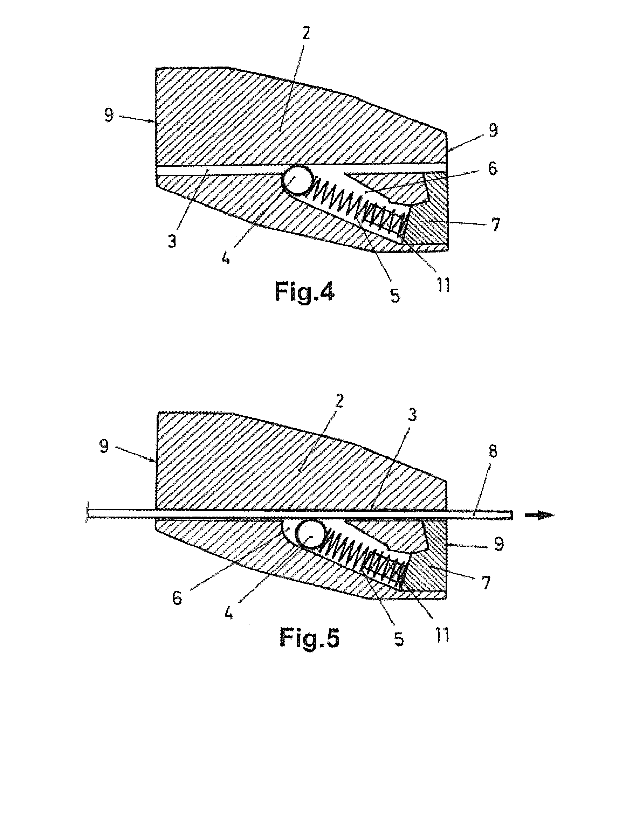

In relation to this retaining abutment function for tensioned cables (8) with respect to securing structures (1), there is provided an embodiment of the body (2) of the retaining member with a single channel (3) for the passage of a cable (8) and in relation to said channel (3) there is arranged a respective locking mechanism, the corresponding portion of the body (2) being completely solid in this case with respect to the channel (3), on the side opposite where the locking mechanism is located, as seen in Figure 4, whereby upon locking a cable (8), the locking force is applied against the solid portion of the body (2), as seen in Figure 5, thus preventing internal deformations from being able to occur in the body (2) of the retaining member due to the action of said locking force.

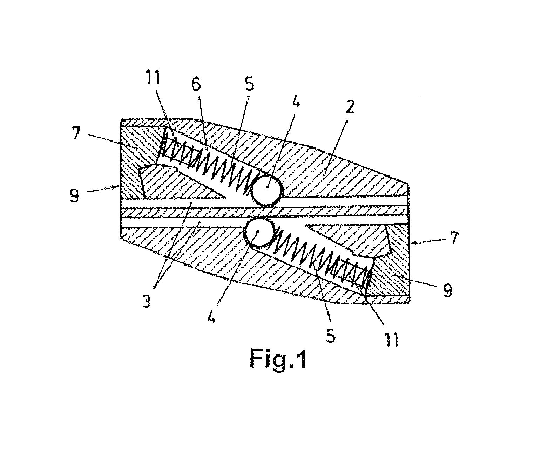

In any case, according to the invention the body (2) of the retaining member is defined, at the ends, with fronts (9) that are completely perpendicular to the channels (3) for the passage of the cables (8) to be retained, as observed in Figure 1.

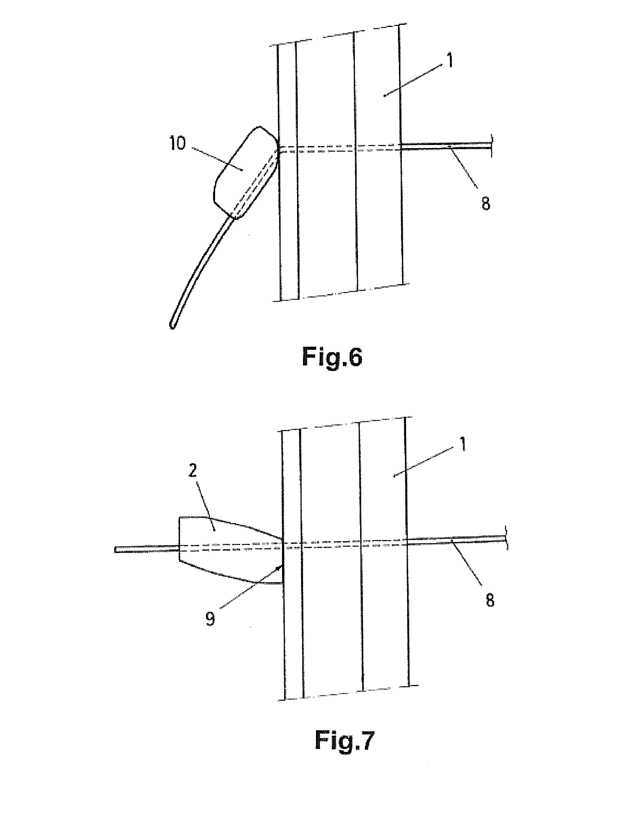

With this, said body (2) of the retaining member in the abutment function for retaining tensioned cables (8) forms a front seating against the support structure (1), which is completely perpendicular to the line of the tensioned cable (8) of application, as seen in Figure 7, such that as a result of said planar front support seating, the retaining member is completely stable in its abutment position, the stress of the cable (8) being maintained constant in the direction of tension, without producing transverse stress components.

The retaining member tilting to find a stable abutment position when loaded with the tension of the cable (8) to be retained is thereby prevented, as the traction means used for tensioning the cable (8) of application no longer act, which is opposite that which occurs with conventional retaining members (10) that have an irregular abutment front which, upon receiving the tension of the tensioned cable (8), adopt an inclined position, as seen in Figure 6, whereby producing an instantaneous transverse stress component affecting the movable part (4) of the locking mechanism, sometimes causing said part to break.

Since the front (9) with which this retaining member of the invention abuts against the support structures (1) is perpendicular to the channels (3) for the passage of the tensioned cables (8), said front (9) prevents the mentioned tilting effect and, accordingly, the transverse stress components that can cause the movable part (4) of the locking mechanism to break.

Said front (9) perpendicular to the channels (3) for the passage of the cables (8) is further provided with conformations (not depicted), such as projections in the form of teeth, knurling, roughness, etc., that prevent sliding when being supported against the structures (1) in the abutment function of the retaining member, whereby achieving a more effective stability function of the retaining member in the retaining abutment of the tensioned cables (8) to prevent harmful stress components.

The cap (7) closing the housing cavity (6) of each locking mechanism is provided with an axial pin (11) in the inner portion on which pin (11) the spring (5) of the respective locking mechanism fits, said spring (5) thus being stable in its position and with a guidance improving its action in pushing the respective movable part (4) for the function of locking the cable (8) passing through the corresponding channel (3).

## Claims

1. A retaining member for tensioned cables, comprising a body (2) provided with one or two longitudinally arranged channels (3), in relation to each of which a locking mechanism is arranged which is formed by a movable part (4) pushed towards the channel (3) by a spring (5), said mechanism being housed in a cavity (6) that is oriented obliquely with respect to the respective channel (3) and is closed by a cap (7) where the spring (5) rests, **characterized in that** the body (2) defines, at the ends, fronts (9) that are completely perpendicular to the channels (3), so that, when supported against a structure (1), upon retaining a tensioned cable (8) passing through it, said body (2) establishes a stable abutment position in the direction of the tensioned cable (8).

2. The retaining member for tensioned cables according to claim 1, **characterized in that** the fronts (9) perpendicular to the channel (3) have projecting anti-slip conformations immobilizing the abutment against the support structures (1).

3. The retaining member for tensioned cables according to claim 1, **characterized in that** the cap (7) closing the housing cavity (6) of each locking mechanism has an axial pin (11) in which the spring (5) of the immobilization mechanism housed therein fits.

4. The retaining member for tensioned cables according to claim 1, **characterized in that** the body (2) is defined with a single channel (3) for the passage of a cable (8) and in relation to it a respective locking mechanism oriented in one direction, the body (2) having a completely solid portion in the corresponding zone, with respect to the conduit (3), on the side opposite where the locking mechanism is located.
